# DEMANDE DE BREVET EUROPEEN

(11) **EP 1 111 701 A1**
(43) Date de publication de la demande: **27.06.2001**
(21) Numéro de dépôt: 00403387.4
(22) Date de dépôt: 04.12.2000
(51) Int. Cl.: H01M 4/52, H01M 4/32

(54) **Electrode au nickel non fritée pour générateur électrochimique secondaire à électrolyte alcalin**

(30) Priorité: 23.12.1999 FR 9916336
(71) Demandeur: ALCATEL, 75008 Paris (FR)
(72) Inventeur: Bernard, Patrick, 33000 Bordeaux (FR); Senyarich, Stéphane, 16600 Mornac (FR)
(74) Mandataire: Laroche, Danièle

(57) **Abrégé**

La présente invention se rapporte à une électrode au nickel non frittée pour générateur secondaire à électrolyte alcalin. L'électrode comporte un collecteur de courant et une pâte comprenant une matière active pulvérulente à base d'hydroxyde de nickel, un matériau conducteur contenant du lithium et du cobalt et un liant. La matière active est constituée de particules d'un hydroxyde contenant majoritairement du nickel au moins partiellement oxydé en oxyhydroxyde de structure β, et ces particules sont au moins partiellement revêtues d'un oxyde lithié de nickel et de cobalt.

## Description

La présente invention concerne une électrode au nickel non-frittée utilisée notamment comme électrode positive dans un générateur électrochimique secondaire à électrolyte alcalin, comme par exemple les accumulateurs nickel-métal hydrurable, nickel-cadmium, nickel-fer, nickel-zinc, nickel-hydrogène et le générateur la contenant. Elle s'étend en outre à un procédé de préparation de cette électrode.

Une électrode au nickel non-frittée se compose d'un support bidimensionnel, comme un feuillard plein ou perforé, un métal déployé, une grille ou un tissu, ou d'un support tridimensionnel, comme une mousse ou un feutre, servant de collecteur de courant. Sur ce collecteur, on enduit une pâte contenant la matière active constituée d'un hydroxyde à base de nickel et un liant, à laquelle on ajoute le plus souvent un matériau conducteur. En effet l'hydroxyde de nickel est un composé peu conducteur qui nécessite l'adjonction dans l'électrode d'un matériau permettant une bonne percolation électrique. Le matériau conducteur est le plus souvent un composé du cobalt tel que du cobalt métallique Co, un hydroxyde de cobalt Co(OH)2 et/ou un oxyde de cobalt CoO.

Lors de la première charge de l'accumulateur, ces composés sont oxydés en oxyhydroxyde de cobalt CoOOH dans lequel le cobalt est porté à un degré d'oxydation supérieur ou égal à +3. L'oxyhydroxyde de cobalt est stable dans le domaine normal de fonctionnement de l'électrode positive au nickel et insoluble dans l'électrolyte alcalin. Il assure la percolation électrique de l'électrode.

Par exemple afin d'accélérer la formation de l'oxyhydroxyde de cobalt CoOOH, le document US-5,405,714 propose d'utiliser dans l'électrode positive une poudre de cobalt métallique Co à laquelle est ajoutée une poudre d'oxyhydroxyde de nickel NiOOH qui est la matière active, dans une proportion inférieur à 60% en poids du cobalt. L'accumulateur est laissé au repos jusqu'à ce que le potentiel de l'électrode positive atteigne celui du couple Co/Co(OH)₂, puis il est chargé et déchargé. Les particules de cobalt Co se recouvrent d'une couche d'oxyhydroxyde de cobalt CoOOH cependant que l'oxyhydroxyde de nickel NiOOH est réduit à l'état d'hydroxyde Ni(OH)₂.

Lors de la première charge, l'oxydation des composés du cobalt correspond à une quantité d'électricité égale sur les électrodes positive et négative. De plus lors des décharges suivantes l'électrode positive n'est pas déchargée complètement (degré d'oxydation 2) mais seulement jusqu'au degré d'oxydation de 2,2 du nickel. De ce fait la capacité non déchargée, appelé précharge, de l'électrode négative augmente à chaque cycle, ce qui diminue progressivement la capacité efficace de cette électrode et contribue à écourter la durée de vie de l'accumulateur.

Stocké à l'état complètement déchargé, un accumulateur alcalin possédant une électrode positive au nickel non frittée voit sa tension décroître avec le temps. Lorsque la durée du stockage dépasse quelques mois, sa tension tend vers 0V. Dans ces conditions, l'oxyhydroxyde de cobalt CoOOH se réduit lentement. Le cobalt est porté d'abord au degré d'oxydation +2,66 dans Co₃O₄, puis il atteint le degré d'oxydation +2 dans Co(OH)₂.

Or l'hydroxyde de cobalt Co(OH)₂ est un composé très soluble dans l'électrolyte. Après une période de stockage de plusieurs mois, on observe une perte de la conductivité due à la dissolution partielle du réseau percolant de l'électrode non-frittée. Il en résulte une perte irréversible de capacité.

Le document EP-0 789 408 proposent d'utiliser une poudre d'hydroxyde de nickel dont les grains sont revêtus par un composé de cobalt contenant entre 0,1 et 10 % en poids de sodium. Les documents US-5,672,447 et EP-0 798 801 proposent de recouvrir une poudre d'hydroxyde de nickel par un composé du cobalt désordonné de valence supérieure à +2. De tels revêtements ne sont pas stables non plus lors d'un stockage à bas potentiel.

Afin de remédier à ce problème, la demande de brevet européen EP-0 866 510 propose une électrode contenant de l'hydroxyde de nickel comme composant principal et un oxyde de lithium et de cobalt représenté par la formule LiₓCoO₂, avec x compris entre 0,2 et 0,9, comme matériau conducteur. La pâte peut aussi contenir un mélange de poudre d'hydroxyde de nickel et de poudre d'hydroxyde de nickel dont la surface des particules est revêtue d'une couche d'oxyde de lithium et de cobalt comme matière active, auquel on ajoute de l'oxyde de lithium et de cobalt comme matériau conducteur. Au cours du stockage du générateur, la perte irréversible de capacité observée est encore trop élevée.

La présente invention a pour but de proposer une électrode au nickel non frittée dont la perte irréversible de capacité en stockage à l'état déchargé est réduite par rapport aux électrodes actuellement connues.

L'invention a aussi pour but de proposer un accumulateur au nickel dont la précharge est réduite grâce à l'utilisation d'une nouvelle électrode positive.

L'objet de la présente invention est une électrode au nickel non frittée pour générateur secondaire à électrolyte alcalin comportant un collecteur de courant et une pâte comprenant une matière active pulvérulente à base d'hydroxyde de nickel, un matériau conducteur contenant du lithium et du cobalt et un liant, caractérisée en ce que ladite matière active est constituée de particules d'un hydroxyde contenant majoritairement du nickel au moins partiellement oxydé en oxyhydroxyde de structure β, lesdites particules étant au moins partiellement revêtues dudit matériau conducteur qui est un oxyde lithié de nickel et de cobalt.

Afin que l'électrode positive ait un taux d'utilisation optimal, la conductivité dudit matériau conducteur est supérieure à 1.10⁻² Siemens.cm⁻¹ après au moins un cycle de charge/décharge appelé formation électrochimique.

Selon un mode de réalisation préférentiel l'oxyde lithié de nickel et de cobalt répond à la formule LiₓNi_{y}Co_{1-y}O₂ dans laquelle 0,1 ≤ x ≤ 1 et 0 < y ≤ 0,9, et de préférence 0,02 ≤ y ≤ 0,9.

Le degré d'oxydation du cobalt dans ledit oxyde lithié est au moins égal à 3, et de préférence égal ou supérieur à 3,2.

Selon un autre mode de réalisation, ledit oxyde lithié de nickel et de cobalt contient du sodium. De préférence l'oxyde lithié répond à la formule LiₓNa_{z}Ni_{y}Co_{1-y}O₂ avec x + z compris entre 0.1 et 1 et z compris entre 0 et 0.5, c'est à dire 0,1 ≤ x + z ≤ 1 et 0 ≤ z ≤ 0,5.

La quantité d'oxyde lithié de nickel et de cobalt est préférentiellement comprise entre 3 et 9% en poids par rapport à ladite matière active.

Selon une variante, ladite pâte contient en outre de la poudre dudit oxyde lithié de nickel et de cobalt.

Le matériau conducteur occupe au moins partiellement la microporosité superficielle de la particule d'hydroxyde à base de nickel. Il s'agit là de la microporosité accessible à l'électrolyte qui participe à la surface électrochimiquement active de l'hydroxyde.

Les particules d'hydroxyde à base de nickel peuvent être de forme variées, allant d'une forme plus ou moins sphérique à une forme irrégulière sans modification de l'invention.

Selon une forme d'exécution préférentielle de l'invention, 5 à 35% en poids dudit hydroxyde de nickel Ni(OH)₂ sont oxydés en oxyhydroxyde NiOOH de structure β, de préférence 5 à 20% en poids, et de préférence encore 10 à 20%.

Il est important qu'il ne se forme pas d'oxyhydroxyde γ-NiOOH car cette phase γ présente des paramètres de maille plus importants que la phase β. Ce caractère de la phase γ induit des cassures et des destructions partielles du revêtement qui sont préjudiciables aux performances de l'électrode, en particulier la conservation de la capacité en stockage.

Il est bien entendu que le terme "matière électrochimiquement active contenant de l'hydroxyde de nickel" utilisé dans la présente demande peut signifier un hydroxyde de nickel, un hydroxyde contenant principalement du nickel, mais également un hydroxyde de nickel contenant au moins un hydroxyde syncristallisé d'un élément choisi parmi le zinc (Zn), le cadmium (Cd), le magnésium (Mg) et l'aluminium (Al), et au moins un hydroxyde syncristallisé d'un élément choisi parmi le cobalt (Co), le manganèse (Mn), l'aluminium (Al), l'yttrium (Y), le calcium (Ca), le strontium (Sr), le zirconium (Zr), le cuivre (Cu).

Un hydroxyde syncristallisé contenu dans l'hydroxyde de nickel est un hydroxyde formant une solution solide avec l'hydroxyde de nickel, i.e. occupant, en proportion continûment variable, les sites atomiques définis par le réseau cristallin de l'hydroxyde de nickel.

Ledit collecteur de courant est avantageusement une mousse de nickel de porosité au moins égale à 90%.

La pâte contient un liant qui assure l'adhésion de la couche active sur le collecteur.

Selon une première variante ledit liant est un mélange d'un polymère cristallin et d'un élastomère. De préférence la proportion dudit polymère cristallin est comprise entre 40% et 75% en poids dudit liant et la proportion dudit élastomère est comprise entre 25% et 60% en poids dudit liant.

Le polymère cristallin peut être choisi parmi un polymère fluoré, comme un copolymère fluoré d'éthylène et de propylène (FEP), le polyhexafluoropropylène (PPHF) ou le polytétrafluoroéthylène (PTFE), et une polyoléfine comme le polyéthylène (PE).

L'élastomère peut être choisi parmi un copolymère de styrène, d'éthylène, de butylène et de styrène (SEBS), un terpolymère de styrène, de butadiène et de vinylpyridine (SBVR) et un copolymère de styrène et de butadiène (SBR).

Selon une deuxième variante ledit liant comprend un premier composant choisi parmi un polymère fluoré, comme le polytétrafluoroéthylène (PTFE), et au moins un deuxième composant choisi parmi un composé cellulosique comme la carboxyméthylcellulose (CMC), l'hydroxypropylméthylcellulose (HPMC), l'hydroxyéthylcellulose (HEC) et l'hydroxypropylcellulose (HPC), un composé fluoré comme le polyfluorure de vinylidène (PVDF), et un élastomère comme un copolymère de styrène et de butadiène (SBR).

Afin de faciliter la réalisation de l'électrode, la pâte peut contenir aussi un épaississant comme un composé cellulosique choisi parmi la carboxyméthylcellulose (CMC), l'hydroxypropylméthylcellulose (HPMC), l'hydroxypropylcellulose (HPC), et l'hydroxyéthylcellulose (HEC).

La pâte peut contenir en outre au moins un autre composé choisi parmi les composés du zinc comme ZnO ou Zn(OH)₂, de l'yttrium comme Y₂O₃ ou Y(OH)₃, et du calcium comme CaO, Ca(OH)₂ ou CaF₂. Ce composé est de préférence ajouté sous forme pulvérulente.

La présente invention a aussi pour objet un procédé de fabrication de l'électrode selon la présente invention décrite précédemment. Le procédé comprend les étape suivantes :
- on prépare une solution contenant un agent oxydant,
- on immerge des particules d'hydroxyde de nickel revêtues dudit matériau conducteur dans ladite solution,
- on laisse lesdites particules en contact avec la solution,
- on sépare lesdites particules oxydées de ladite solution,
- on lave et on sèche lesdites particules oxydées.

De préférence ledit agent oxydant est choisi parmi l'hypochlorite de sodium et l'hypochlorite de calcium. La solution oxydante est de préférence une solution aqueuse d'hypochlorite de sodium ou d'hypochlorite de calcium

La quantité d'agent oxydant utilisée est comprise entre une fois et trois fois la quantité stoechiométrique nécessaire à l'oxydation dudit hydroxyde de nickel.

La température de la solution est de 20°c mais peut être augmentée jusqu'à 90°C sans modification des caractéristiques des produits obtenus. De préférence la température de la solution est au plus de 40°C.

La durée du contact entre les particules d'hydroxyde de nickel et la solution est comprise entre une heure et trois heures, ce qui est suffisant mais la durée de contact peut être prolongée sans inconvénient.

La température de séchage est comprise entre 40°C et 100°C pendant une durée comprise entre 12 heures et 48 heures.

La présente invention a aussi pour objet un générateur électrochimique secondaire de type nickel-métal hydrurable comprenant
. une électrode positive selon la présente invention telle que décrite précédemment,
. un séparateur,
. une électrode négative dont la matière électrochimiquement active est un composé intermétallique capable de former un hydrure une fois chargé, la quantité totale de matière électrochimiquement active de ladite électrode négative dépassant la quantité totale de matière électrochimiquement active de ladite électrode positive de telle sorte que la capacité totale négative dépasse la capacité totale positive d'une quantité appelée surcapacité, une partie de ladite surcapacité appelée précharge étant partiellement à l'état chargé une fois ladite électrode positive complètement déchargée, ladite précharge représentant moins de 12% de ladite capacité négative, et
. un électrolyte aqueux alcalin.

D'autres caractéristiques et avantages de la présente invention apparaîtront au cours de la description suivante de modes de réalisation donnés à titre illustratif, mais nullement limitatif.

### EXEMPLE 1

Une électrode X contenant une matière active qui est une poudre d'hydroxyde de nickel revêtu d'une couche d'un composé du cobalt de valence supérieure à 2 est préparée de la manière suivante.

A une suspension de poudre d'hydroxyde de nickel dans l'eau, on ajoute à une solution de sulfate de cobalt CoSO₄ et une solution d'hydroxyde de sodium NaOH en maintenant le pH à 10. Une couche de composé du cobalt se dépose sur les particules d'hydroxyde de nickel. Le rapport du composé du cobalt à l'hydroxyde de nickel représente 10% en mole.

Puis la matière active précédemment obtenue est oxydée chimiquement de la manière suivante. La poudre est ajoutée à une solution aqueuse d'hydroxyde de sodium NaOH de concentration 25% en poids. L'ensemble est traité thermiquement à 100°C en présence d'oxygène gazeux . Après lavage à l'eau et séchage, on obtient une poudre de matière active constituée de particules d'hydroxyde de nickel revêtues d'un composé du cobalt de valence 2,9 à structure désordonnée.

Une électrode X est fabriquée de la manière suivante, avec une pâte ayant comme composition pondérale (exprimée en % par rapport au poids de la pâte) :
- matière active : hydroxyde de nickel revêtu d'une couche de composé du cobalt 98,7%
- liant : polytétrafluoroéthylène (PTFE) 1%
- épaississant : carboxyméthylcellulose (CMC) 0,3%

La viscosité de la pâte est ajustée avec de l'eau. La pâte est introduite dans le collecteur de courant qui est une mousse de nickel de porosité environ 95%. L'ensemble est alors séché puis laminé pour obtenir l'électrode X .

Cette électrode est utilisée comme électrode positive dans un accumulateur AX de capacité nominale C comportant en outre une électrode négative, un séparateur et un électrolyte.

L'électrode négative a comme matière électrochimiquement active un composé intermétallique capable de former un hydrure une fois chargé. Sa capacité est supérieure à celle de l'électrode positive. Chaque électrode positive est accolée à une électrode négative dont elle est isolée par un séparateur constitué d'un non-tissé de polypropylène pour former le faisceau électrochimique. Le faisceau spiralé est inséré dans un godet métallique et imprégné d'un électrolyte alcalin qui est une solution aqueuse d'hydroxyde de potassium KOH 7,4N, d'hydroxyde de lithium LiOH 0,5N et d'hydroxyde de sodium NaOH 0,4N.

Une évaluation de la perte irréversible en stockage à l'état complètement déchargé de l'accumulateur AX est effectuée dans les conditions suivantes :
- cycle 1 :: charge à 0,1 lc pendant 16 heures à 20°C, où lc est le courant nécessaire pour décharger la capacité nominale C d'un accumulateur en 1 heure, décharge à 0,2 lc jusqu'à une tension d'arrêt de 1 Volt ;
- cycles 2 et 3 :: charge à lc pendant 1,2 heures à 20°C, décharge à lc jusqu'à une tension d'arrêt de 1 Volt.

L'accumulateur AX est alors stocké à l'état déchargé à température ambiante. Au bout d'environ deux mois, on observe que la tension de l'accumulateur est devenu inférieure à la tension de stabilité de l'oxyhydroxyde de cobalt (1,05V).

Après 6 mois de stockage, on effectue une mesure de capacité restante dans les conditions suivantes.
- cycles 4 à 9 :: charge à lc pendant 1,2 heure à 20°C, décharge à lc jusqu'à 1 Volt.

Les capacités massiques avant et après stockage rapportées au poids de matière active sont regroupées dans le tableau 1 ci-après.

### EXEMPLE 2

Une électrode Y contenant une matière active qui est une poudre d'hydroxyde de nickel revêtu d'une couche d'oxyde de lithium et de cobalt est préparée de la manière suivante.

A une suspension de poudre d'hydroxyde de nickel dans l'eau, on ajoute à une solution de sulfate de cobalt CoSO₄ et une solution d'hydroxyde de sodium NaOH de tel sorte que le pH soit compris entre 9 et 10. Une couche d'hydroxyde de cobalt Co(OH)₂ recouvre les particules d'hydroxyde de nickel. Ce produit est traité thermiquement pendant 48 heures à 120°C pour transformer l'hydroxyde de cobalt Co(OH)₂ en oxyhydroxyde CoOOH. Puis le produit résultant est introduit dans une solution alcaline d'hydroxyde de lithium LiOH, et l'ensemble est maintenu à 80°C sous agitation pendant 48 heures. On obtient une poudre d'hydroxyde de nickel dont les particules sont revêtus d'un oxyde lithié de cobalt LiCoO₂. L'oxyde lithié de cobalt représente 5% en poids par rapport à la matière active.

Une électrode Y est fabriquée de la manière suivante avec une pâte ayant comme composition pondérale (exprimée en % par rapport au poids de la pâte) :
- matière active : hydroxyde de nickel revêtu d'une couche d'oxyde de lithium et de cobalt 98,7%
- liant : PTFE 1%
- épaississant : CMC 0,3%

La viscosité de la pâte est ajustée avec de l'eau. La pâte est introduite dans le collecteur de courant qui est une mousse de nickel de porosité environ 95%. L'ensemble est séché puis laminé pour obtenir l'électrode Y.

Cette électrode est utilisée comme électrode positive dans un accumulateur AY analogue à celui décrit dans l'exemple 1.

Une évaluation de la perte irréversible en stockage à l'état déchargé de l'accumulateur AY est effectuée dans les conditions décrites dans l'exemple 1.

Les capacités massiques avant et après stockage rapportées au poids de matière active sont regroupées dans le tableau 1 ci-après.

### EXEMPLE 3

Une électrode Z₁ contenant une matière active qui est une poudre d'hydroxyde de nickel dont les particules sont revêtues d'une couche d'un oxyde lithié de nickel et de cobalt est préparée de la manière suivante.

Une poudre d'hydroxyde de nickel est mise en suspension dans une solution de sulfate de cobalt CoSO₄ de concentration 4M et de sulfate de nickel NiSO₄ de concentration 0,2M maintenue à une température de 70°C. Une solution d'hydroxyde de sodium NaOH est rajoutée lentement pour conserver un pH de la solution entre 9 et 11. La poudre obtenue est alors lavée puis séchée.

On obtient des particules d'hydroxyde de nickel revêtues d'une couche d'hydroxyde de nickel et de cobalt de composition Ni_{0,5}Co_{0,95}(OH)₂. La poudre est alors mise en solution dans une solution d'hydroxyde de lithium LiOH de concentration 5N maintenue à 90°C pendant 24h en présence d'oxygène. La poudre est alors lavée et séchée.

On obtient une poudre d'hydroxyde de nickel revêtue d'oxyde lithié de nickel et de cobalt de composition LiₓNi_{0,05}Co_{0,95}O₂. Par analyse spectroscopique, on constate que x est égal à 0,95. Le diamètre des particules de la poudre obtenue est de 11 *µ*m, mesuré par granulométrie laser. La quantité d'oxyde lithié de nickel et de cobalt déposée sur la poudre d'hydroxyde de nickel est de 6%.

La poudre d'hydroxyde de nickel revêtue par un oxyde lithié de nickel et de cobalt est alors soumise à une oxydation chimique dans les conditions suivantes. La poudre est mise en contact avec une solution oxydante contenant de l'hypochlorite de sodium NaOCl en quantité stoechiométrique pour obtenir un taux d'oxydation de 13%. Les particules sont maintenues en suspension à la température de 20°C pendant 1 heure. La poudre est ensuite lavée à température ambiante par de l'eau distillée, puis séchée à une température de l'ordre de 70°C pendant 5 heures.

On vérifie par diffraction des rayons X que l'hydroxyde de nickel Ni(OH)₂ a été partiellement oxydé en β-NiOOH, et que les caractéristiques cristallographiques de la couche superficielle ne sont pas modifiées. Le diamètre des particules de la poudre obtenue, mesuré par granulométrie laser, est de 11*µ*m. Par analyse spectroscopique, on constate que le revêtement d'oxyde lithié a la formule LiₓNi_{0,05}Co_{0,95}O₂ avec x égal à 0,93.

L'électrode Z₁ est fabriquée de la manière suivante avec une pâte ayant comme composition pondérale (exprimée en % par rapport au poids de la pâte) :
- matière active : hydroxyde de nickel revêtu d'oxyde lithié de nickel et de cobalt 98,7%
- liant : PTFE 1%
- épaississant : CMC : 0,3%

La viscosité de la pâte est ajustée avec de l'eau. La pâte est introduite dans le collecteur de courant qui est une mousse de nickel de porosité environ 95%. L'ensemble est séché puis laminé pour obtenir l'électrode Z.

Cette électrode est utilisée comme électrode positive dans un accumulateur AZ₁ analogue à celui décrit dans l'exemple 1.

Une évaluation de la perte irréversible en stockage à l'état déchargé de l'accumulateur AZ₁ est effectuée dans les conditions décrites dans l'exemple 1.

Les capacités massiques avant et après stockage de l'électrode Z₁, rapportées au poids de matière active, sont regroupées dans le tableau 1 ci-après.

**TABLEAU 1**

| accumulateur | AX | AY | AZ₁ |
|---|---|---|---|
| capacité massique au cycle 3 (mAh/g) | 231 | 240 | 251 |
| capacité massique au cycle 9 (mAh/g) | 205 | 235 | 250 |
| pertes irréversible en stockage (%) | 11 | 2 | 0,4 |

### EXEMPLE 4

On réalise une électrode Z₂ analogue à l'exemple 3, à l'exception du fait que la matière active est une poudre d'hydroxyde de nickel composée majoritairement de nickel, contenant environ 3,5% d'hydroxyde de cobalt syncristallisé et environ 5% d'hydroxyde de zinc syncristallisé, dont les particules sont revêtus d'une couche d'oxyde lithié de nickel et de cobalt. Elle est préparée de la manière décrite dans l'exemple 2.

Une électrode Z₂ est assemblée dans un accumulateur AZ₂ de la même façon que dans l'exemple 1.

Une évaluation de la perte irréversible en stockage à l'état déchargé de l'accumulateur AZ₂ effectuée dans les conditions décrites dans l'exemple 1 a conduit aux même résultats que l'accumulateur AZ₁.

## Revendications

1. Electrode au nickel non frittée pour générateur secondaire à électrolyte alcalin comportant un collecteur de courant et une pâte comprenant une matière active pulvérulente à base d'hydroxyde de nickel, un matériau conducteur contenant du lithium et du cobalt et un liant, caractérisée en ce que ladite matière active est constituée de particules d'un hydroxyde contenant majoritairement du nickel au moins partiellement oxydé en oxyhydroxyde de structure β, lesdites particules étant au moins partiellement revêtues dudit matériau conducteur qui est un oxyde lithié de nickel et de cobalt.

2. Electrode selon la revendication 1, dans laquelle la conductivité dudit matériau conducteur est supérieure à 1.10⁻² Siemens.cm⁻¹ après au moins un cycle de charge/décharge.

3. Electrode selon l'une des revendications 1 et 2, dans laquelle ledit oxyde lithié de nickel et de cobalt a pour formule LiₓNi_{y}Co_{1-y}O₂ dans laquelle 0,1 ≤ x ≤ 1 et 0 < y ≤ 0,9.

4. Electrode selon la revendication 3, dans laquelle 0,02 ≤ y ≤ 0,9.

5. Electrode selon l'une des revendications 1 à 4, dans laquelle le degré d'oxydation du cobalt dans ledit oxyde lithié est au moins égal à 3.

6. Electrode selon l'une des revendications 1 à 5, dans laquelle ledit oxyde lithié contient du sodium.

7. Electrode selon la revendication 6, dans laquelle ledit oxyde lithié répond à la formule LiₓNa_{z}Ni_{y}Co_{1-y}O₂ avec x + z compris entre 0.1 et 1 et z compris entre 0 et 0.5.

8. Electrode selon l'une des revendications 1 à 7, dans laquelle la quantité dudit oxyde lithié est comprise entre 3 et 9 % en poids par rapport à ladite matière active.

9. Electrode selon l'une des revendications 1 à 8, dans laquelle ladite pâte contient en outre de la poudre dudit oxyde lithié.

10. Electrode selon l'une des revendications 1 à 9, dans laquelle 5 à 35% en poids dudit hydroxyde de nickel est oxydé en oxyhydroxyde de structure β.

11. Electrode selon la revendication 10, dans laquelle 5 à 20% en poids dudit hydroxyde de nickel est oxydé en oxyhydroxyde de structure β.

12. Electrode selon l'une des revendications 10 et 11, dans laquelle 10 à 20% en poids dudit hydroxyde de nickel est oxydé en oxyhydroxyde de structure β.

13. Electrode selon l'une des revendications 1 à 12, dans laquelle ledit hydroxyde de nickel contient du nickel, et au moins un hydroxyde syncristallisé d'un élément choisi parmi le zinc, le cadmium, le magnésium et l'aluminium.

14. Electrode selon la revendication 13, dans laquelle ledit hydroxyde de nickel contient en outre au moins un hydroxyde syncristallisé d'un élément choisi parmi le cobalt, le manganèse, l'aluminium, l'yttrium, le calcium, le strontium, le zirconium et le cuivre.

15. Electrode selon l'une des revendications 1 à 14, dans laquelle ledit collecteur de courant est une mousse de nickel.

16. Electrode selon l'une des revendications 1 à 15, dans laquelle ledit liant est un mélange d'un polymère cristallin et d'un élastomère.

17. Electrode selon la revendication 16, dans laquelle la proportion dudit polymère cristallin est comprise entre 40% et 75% en poids dudit liant et la proportion dudit élastomère est comprise entre 25% et 60% en poids dudit liant.

18. Electrode selon l'une des revendications 16 et 17, dans laquelle ledit polymère cristallin est choisi parmi un polymère fluoré et une polyoléfine.

19. Electrode selon l'une des revendications 16 à 18, dans laquelle ledit élastomère est choisi parmi un copolymère styrène / éthylène / butylène / styrène, un terpolymère styrène / butadiène / vinylpyridine et un copolymère styrène / butadiène.

20. Electrode selon l'une des revendications 1 à 15, dans laquelle ledit liant comprend un premier composant à base de polytétrafluoroéthylène et un deuxième composant choisi parmi la carboxyméthylcellulose, l'hydroxypropylméthylcellulose, l'hydroxyéthylcellulose, l'hydroxypropylcellulose, le polyfluorure de vinylidène, et un copolymère styrène / butadiène.

21. Générateur électrochimique secondaire comprenant
une électrode positive selon l'une des revendications 1 à 20,
un séparateur,
une électrode négative dont la matière électrochimiquement active est un composé intermétallique capable de former un hydrure une fois chargé, la quantité totale de matière électrochimiquement active de ladite électrode négative dépassant la quantité totale de matière électrochimiquement active de ladite électrode positive de telle sorte que la capacité totale négative dépasse la capacité totale positive d'une quantité appelée surcapacité, une partie de ladite surcapacité appelée précharge étant partiellement à l'état chargé une fois ladite électrode positive complètement déchargée, ladite précharge représentant moins de 12% de ladite capacité négative, et
un électrolyte aqueux alcalin.

22. Procédé de fabrication d'une électrode selon l'une des revendications 1 à 20, comprenant les étapes suivantes:
- on prépare une solution contenant un agent oxydant,
- on immerge des particules d'hydroxyde de nickel revêtues dudit matériau conducteur dans ladite solution,
- on laisse lesdites particules en contact avec ladite solution,
- on sépare lesdites particules oxydées de ladite solution,
- on lave et on sèche lesdites particules oxydées.

23. Procédé selon la revendication 22, dans lequel ledit agent oxydant est choisi parmi l'hypochlorite de sodium et l'hypochlorite de calcium.

24. Procédé selon l'une des revendications 22 et 23, dans lequel la quantité dudit agent oxydant est comprise entre une fois et trois fois la quantité stoechiométrique nécessaire à l'oxydation dudit hydroxyde de nickel.

25. Procédé selon l'une des revendications 22 à 24, dans lequel la température de la solution est comprise entre 20°C et 90°C.

26. Procédé selon la revendication 25, dans lequel la température de la solution est comprise entre 20°C et 40°C.

27. Procédé selon l'une des revendications 22 à 26, dans lequel la durée du contact entre les particules d'hydroxyde de nickel et la solution est comprise entre une heure et trois heures.

28. Procédé selon l'une des revendications 22 à 27, dans lequel la température de séchage est comprise entre 40°C et 100°C.

29. Procédé selon l'une des revendications 22 à 28, dans lequel la durée du séchage est comprise entre 12 heures et 48 heures.
